# EUROPEAN PATENT APPLICATION

(11) **EP 2 495 553 A2**
(43) Date of publication of application: **05.09.2012**
(21) Application number: 12157774.6
(22) Date of filing: 01.03.2012
(51) Int. Cl.: G01N 21/954, F01D 5/00, F01D 21/00, G02B 23/24

(54) **Portable boroscope for inspecting turbomachine blades**

(30) Priority: 03.03.2011 US 201113039596
(71) Applicant: United Technologies Corporation, Hartford, CT 06101 (US)
(72) Inventor: TRZCINSKI, Frank J., Ellington, CT Connecticut 06029 (US)
(74) Representative: Leckey, David Herbert

(57) **Abstract**

A portable boroscope assembly (66) for inspecting passages within a turbomachine blade includes a boroscope probe (68) and a display screen (78). The display screen (78) is configured to show images of areas inspected by the boroscope probe (68). A battery (76) powers the display screen (78). A protective case (82) holds at least the display screen (78) and the battery (76). The protective case (82) defines an aperture (86). The display screen (78) is viewable through the aperture (86).

## Description

### BACKGROUND

This disclosure relates generally to inspecting turbomachine components and, more particularly, to inspecting turbomachine blades using a portable boroscope.

Turbomachines include various blades. Some blades rotate during operation. Other blades remain stationary. The blades may operate in high temperatures environments. Exposure to sufficiently high temperatures can damage the blades as is known. Accordingly, many blades include internal passages that communicate a flow of air through the blades. The flow of air removes thermal energy from the blades to cool the blades.

Blades become worn over time, and some blades may become damaged. Operating the turbomachine with worn or damaged blades can reduce the efficiency of the turbomachine. Replacement blades are expensive to manufacture. Thus, it is often desirable to refurbish worn or damaged blades, rather than replacing worm or damaged blades with new blades.

The internal passages in the blades are periodically inspected during a refurbishing procedure. The inspection identifies blockages, internal damage, etc. The internal passages of newly manufactured blades typically undergo a similar inspection. Technicians may use bench-based boroscopes to inspect the internal passages. Inspecting the blades using bench-based boroscopes is time consuming as the blades must be moved to the location of the bench-based boroscope.

### SUMMARY

An example portable boroscope assembly for inspecting passages within a turbomachine blade includes a boroscope probe and a display screen. The display screen is configured to show images of areas inspected by the boroscope probe. A battery powers the display screen. A protective case holds at least the display screen and the battery. The protective case defines an aperture. The display screen is viewable through the aperture.

Another example portable boroscope assembly for inspecting passages within a turbomachine blade includes a camera and a probe tip operatively coupled with the camera. The assembly also includes a display and a light that are operatively coupled to the probe tip. A battery powers the camera, the display, and the light. The protective case holds at least the display and the battery.

An example method of inspecting a turbomachine blade using a boroscope inspection assembly includes powering a boroscope inspection device using a battery and inspecting a fluid passage established within a turbomachine blade using the boroscope inspection device.

### DESCRIPTION OF THE FIGURES

The various features and advantages of the disclosed examples will become apparent to those skilled in the art from the detailed description. The figures that accompany the detailed description can be briefly described as follows:
FIGURE 1 shows a cross-section view of an example turbomachine.
FIGURE 2 shows a perspective view of an example blade from the Figure 1 turbomachine.
FIGURE 3 shows an end view of the Figure 2 blade.
FIGURE 4 shows an example boroscope inspection device used to inspect the Figure 2 blade.
FIGURE 5 shows another view of the Figure 4 boroscope inspection device.
FIGURE 6 shows a close-up view of a probe of the Figure 4 boroscope inspection device.
FIGURE 7 shows a section view at line 7-7 in Figure 6.

### DETAILED DESCRIPTION

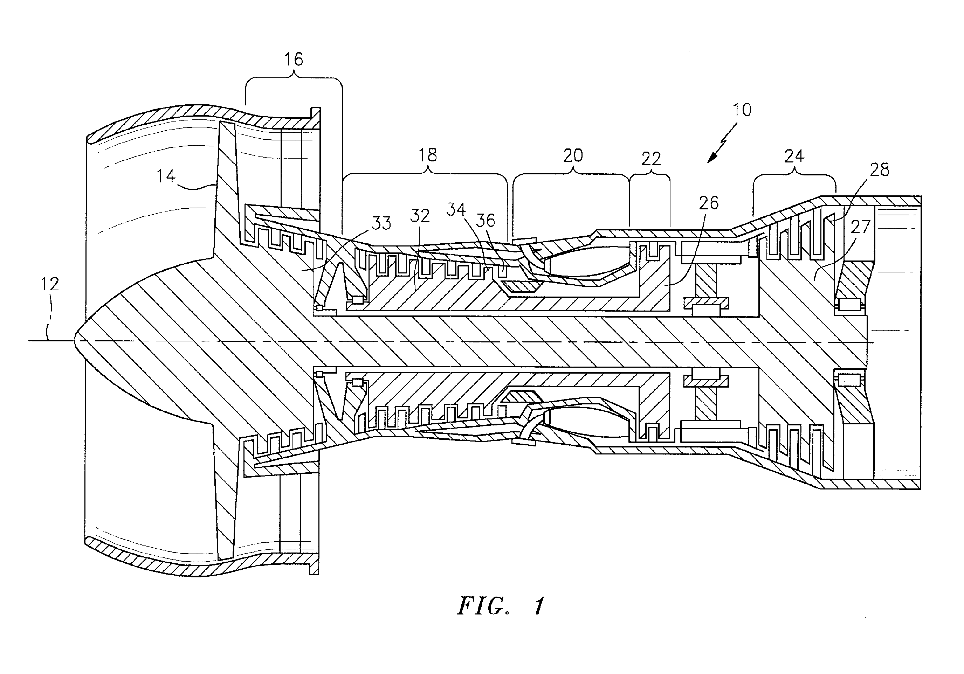

Referring to Figure 1, an example turbomachine, such as a gas turbine engine 10, is circumferentially disposed about an axis 12. The gas turbine engine 10 includes a fan 14, a low pressure compressor section 16, a high pressure compressor section 18, a combustion section 20, a high pressure turbine section 22, and a low pressure turbine section 24. Other example turbomachines may include more or fewer sections.

During operation, air is compressed in the low pressure compressor section 16 and the high pressure compressor section 18. The compressed air is then mixed with fuel and burned in the combustion section 20. The products of combustion are expanded across the high pressure turbine section 22 and the low pressure turbine section 24.

The high pressure compressor section 18 includes a rotor 32. The low pressure compressor section 16 includes a rotor 33. The rotors 32 and 33 are configured to rotate about the axis 12. The example rotors 32 and 33 include alternating rows of rotating airfoils or rotating blades 34 and static airfoils or static blades 36. The static blades 36 may also be referred to as static vanes.

The high pressure turbine section 22 includes a rotor 26. The low pressure turbine section 24 includes a rotor 27. The rotors 26 and 27 are configured to rotate about the axis 12 in response to expansion to drive the high pressure compressor section 18 and the low pressure compressor section 16. The example rotors 26 and 27 include rotating arrays of blades 28, for example.

The example turbomachine described in this disclosure is not limited to the two spool gas turbine architecture described, however, and may be used in other architectures, such as the single spool axial design, a three spool axial design, and still other architectures. That is, there are various types of gas turbine engines, and other turbomachines, that can benefit from the examples disclosed herein.

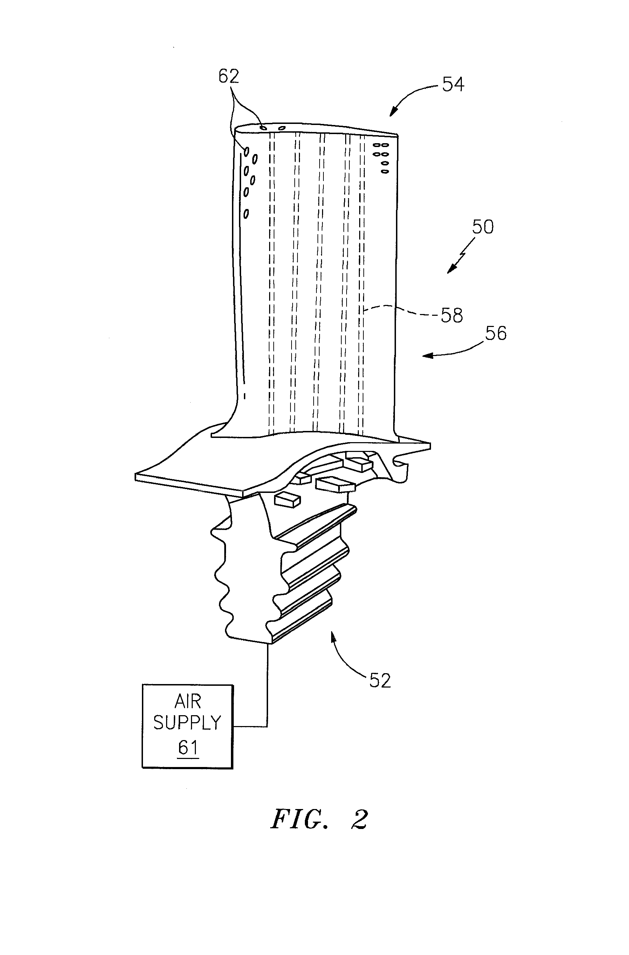

Referring to Figures 2-3, an example blade 50 from the Figure 1 turbomachine extends axially from a base 52 to a tip 54. The blade 50 includes a radially extending airfoil 56.

In this example, the blade 50 is one of the rotating blades from the rotor 32. In other examples, the blade 50 is a stationary blade, or a blade from the one of the turbine sections 26 and 27.

The example blade 50 has been used within the engine 10 and is being refurbished for the purpose of reinstallation into the engine 10. Example refurbishing processes may include acid stripping blades, reapplying coatings to blades, adding new tips to blades, adding additional material to worn areas of blades..

The example blade 50 establishes a plurality of internal passages 58. In this example, apertures 60 established in the base 52 represent the starting point for internal passages 58, and cooling holes 62 represent the termination point. During operation, a cooling airflow moves from an air supply 61 into the internal passages 58 through the apertures 60. The cooling airflow exits the internal passages 58 through the cooling holes 62.

The cooling airflow moving through the internal passages 58 of the blade 50 cools the blade 50. Also, air exiting the internal passages 58 through the cooling holes 62 may cool the blade 50 by film cooling, for example. The internal passages 58 are a type of fluid communication paths.

Only a few internal passages 58 and cooling holes 62 are shown in this example. A person having skill in this art and the benefit of this disclosure would understand that many more internal passages 58 and cooling holes 62 may be established within the blade 50 depending on specific design requirements. Further, although the example internal passages 58 are relatively linear, other examples may include serpentine passages, or passages that follow other paths.

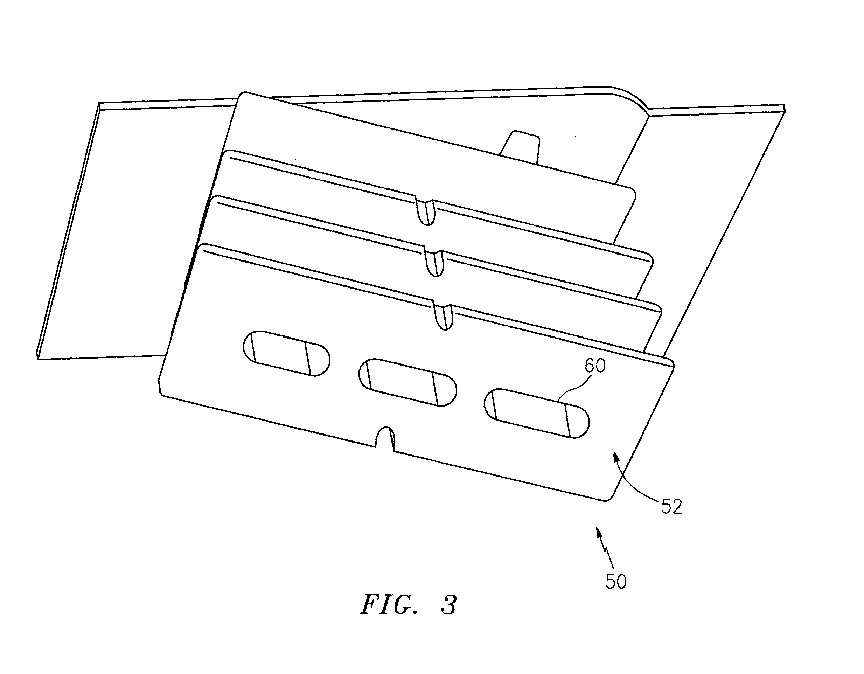

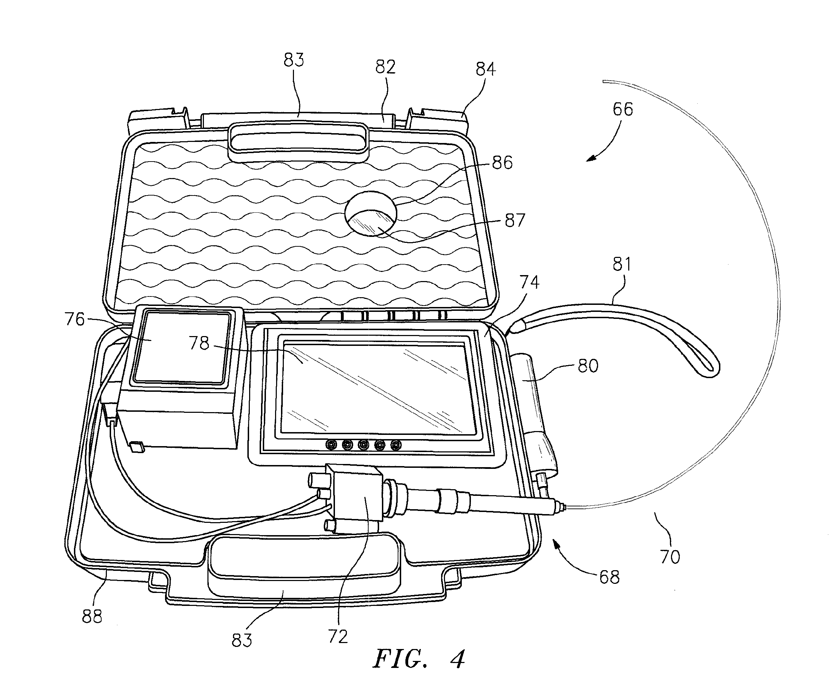

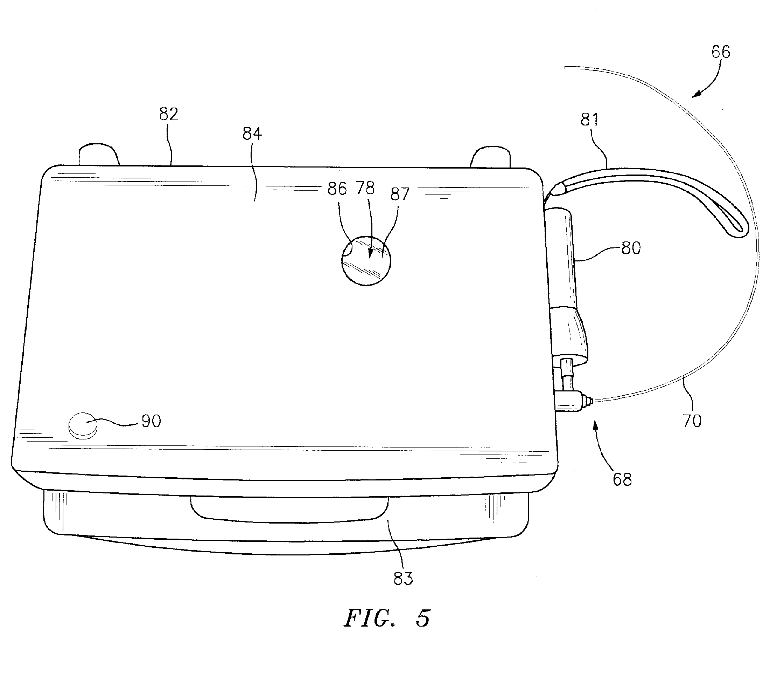

Referring now to Figures 4 and 5 with continuing reference to Figures 2 and 3, an example boroscope inspection device 66 is used to inspect the internal passages 58 of the blade 50. The inspection device 66 may reveal internal passages 58 that are blocked, for example. Such blockages prevent a cooling airflow from moving through some portions of the blade 50, which can undesirably result in thermal energy concentrations within the blade 50. The inspection device 66 may be used to inspect a blade that is being refurbished or to inspect a newly manufactured blade.

The example inspection device 66 includes a probe 68 having a probe tip 70. A video camera 72 is removably attachable to the probe 68. In some examples, an adapter may be required to attach the video camera 72 and the probe 68.

The example video camera 72 is operatively linked to a display 74 and a battery 76. The display 74 includes a display screen 78 that shows images inspected by the probe 68. A person having skill in this art and the benefit of this disclosure would understand how to display the images of the inspected areas on the display screen 78. The display screen is a 7 inch (17.78 centimeter) display screen in this example. The images show a blockage within the internal passages 58.

In this example, the display 74 and the video camera 72 are both powered exclusively by the battery 76. The example battery 76 is a 12 volt, 5.2 amp rechargeable battery. The life of the example battery 76 is about 3.0 hours. A recharging station may be used to recharge the battery 76 when the inspection device 66 is not in use.

The example inspection device 66 also includes a light 80 that is removably attachable to the probe 68. The light 80 is used to illuminate areas inspected by the probe 68, such as the internal passages 58.

A wriststrap 81 is attached to the light 80 to help an inspector secure the probe 68 and the light 80 during an inspection procedure.

The example inspection device 66 includes a protective case 82 that holds the battery 76, the display 74, and the video camera 72. During an inspection procedure, the video camera 72 may be removed from the protective case 82 or may stay within the protective case 82. The probe 68 typically remains outside the protective case 82, along with the light 80, regardless the location of the video camera 72.

The example protective case includes a lid 84 that establishes an aperture 86. The aperture 86 allows a user, such as the inspector, to view at least a portion of the display screen 78 when the lid 84 is closed. A clear protective cover 87 is used in this example to protect against damage to the screen 78 through the aperture 86, which is about 1.5 inches (3.81 cm) in this example. The example protective case 82 is 14 inches (45.56 cm) long, 10 inches (25.4 cm) wide, and 3.5 inches (8.89 cm) tall.

In this example, the lid 84 of the protective case 82 is closed when the lid 84 is placed over a base 88 of the protective case 82. The lid 84 is hinged to the base 88 in this example. Figure 4 shows the protective case 82 in an open position, and Figure 5 shows the protective case 82 in a closed position. Notably, an inspection may be carried out with the protective case 82 in a closed position.

An on/off switch 90 is secured within the lid 84 of the example protective case 82. An inspector actuates the on/off switch 90 to selectively supply power to the video camera 72 and the display 74 from the battery 76. The protective case 82 also includes a charging location (not shown) for the battery 76 so that the battery 76 may be recharged at the 110V recharging station without requiring the operator to open the protective case 82. Wiring connects the various components of the inspection device 66 where needed.

During an inspection procedure utilizing the inspection device 66, the inspector may transport the inspection device 66 to the blade 50 using a carrying handle 83 established within the protective case 82. The probe tip 70 is then inserted through the aperture 60 established within the base 52 of the blade 50. The inspector may be required to attach the probe 68 and light 80 to the video camera 72 prior to insertion of the probe tip 70. Notably, the shape of the probe tip 70 allows the inspector to inspect the full radial length of the internal passages 58 by continuing to insert the probe tip 70 into the aperture 60. The probe tip 70 is flexible, which also facilitates inspection.

The inspection may reveal, for example, foreign material, corrosion, and damage within the internal passages 58. The probe tip 70 may be used to inspect internal trip strips in some examples. In some examples, the inspection utilizing the inspection device 66 is coupled with inspections utilizing a magnitoscope, which may improve detection of corrosion.

Typical blades inspected by the inspection device 66 are between 3 inches (76.2 mm) and 10 inches (254 mm) long. The example probe tip 70 is longer than the typical blades to provide the operator with adequate length to manipulate the position of the probe tip 70. Although described as a inspection device 66 used to inspect the internal passages 58 of a blade 50, the inspection device 66 may be used to inspect other areas of the engine 10 requiring a relatively slender probe tip.

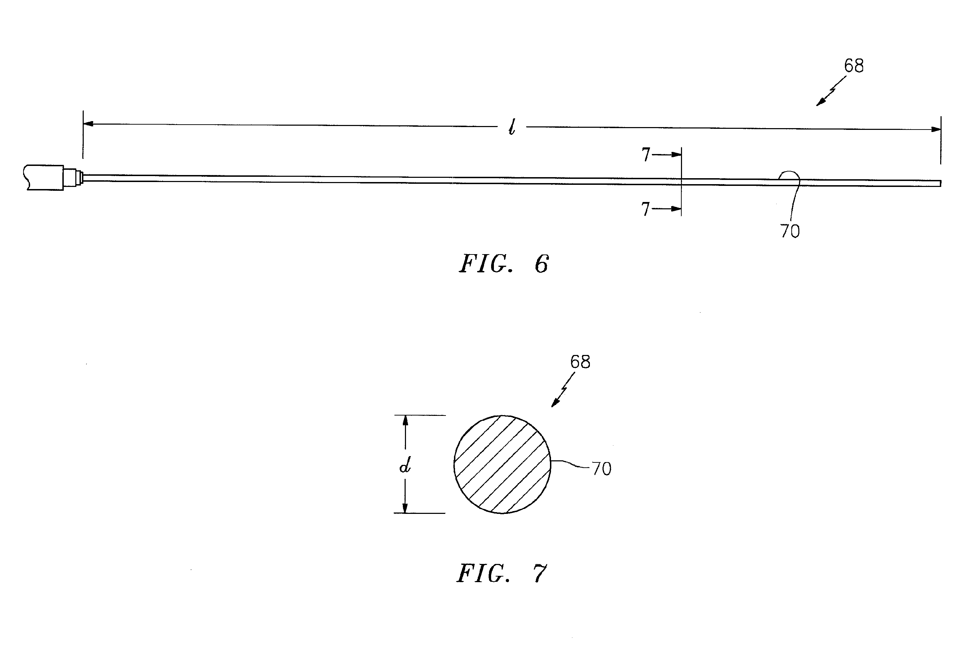

Referring now to Figures 6 and 7 with continued reference to Figure 3, an example probe tip 70 has a length 1 that is between 17-3/8 inches (44.1325 cm) and 29-3/8 inches (74.6125 cm). In one specific example, the probe tip 70 is 25 inches (63.5 cm) with a tolerance of +/- 1/8 inch (3.175 cm). The diameter d of the example probe tip 70 is about 0.03 inches (0.762 mm). Other examples may include probe tips having diameters that are between 0.02 inches (0.508 mm) and 0.04 inches (1.016 mm). The relatively slender nature and flexibility of the example probe tip 70 facilitates insertion of the probe tip 70 into the internal passages of the blade 50. Typically, a ratio of the length 1 of the probe tip 70 to the diameter d of the probe tip 70 is between 434 and 1,469.

Features of the disclosed examples include an inspection device that may be transported to the location of a blade requiring inspection, rather than requiring transport of the blade to the inspection device. Another feature of the example inspection device is a probe tip suitable for inspection fluid communication paths within turbomachine blades. The inspection device displays images from a display screen within a protective case that also houses the battery.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. A portable boroscope assembly (66) for inspecting passages (58) within a turbomachine blade (50), comprising:
a boroscope probe (68);
a display screen (78) configured to show images of areas inspected by the boroscope probe (68);
a battery (76) that powers the display screen (78); and
a protective case (82) configured to hold at least the display (78) and the battery (76), the protective case (82) defining an aperture (86), wherein at least portion of the display screen (78) is viewable through the aperture (86).

2. The portable boroscope assembly of claim 1, including a light (80) positioned outside the protective case (82), the light configured to be powered by the battery (76).

3. The portable boroscope assembly of claim 1 or 2, including a video camera (72) that is powered by the battery (76), the protective case (82) further configured to hold the video camera (72).

4. The portable boroscope assembly of claim 1, 2 or 3, wherein the probe (68) comprises a probe tip (70) configured to be inserted into an internal passage (58) of a turbine blade (50).

5. A portable boroscope assembly (66) for inspecting passages (58) within a turbomachine blade (50), comprising:
a video camera (72);
a probe tip (71) operatively coupled with the camera (72);
a display (74);
a light (80) operatively coupled to the probe tip (71);
a battery (76) that powers the video camera (72), the display (74), and the light (80) ; and
a protective case (82) configured to hold the at least the display (74) and the battery (76).

6. The portable boroscope assembly of claim 4 or 5, wherein the probe tip (71) has a length that is between 17.375 and 29.375 inches (44.1325 cm and 74.6125 mm).

7. The portable boroscope assembly of claim 4, 5 or 6, wherein the probe tip (71) has a diameter that is between 0.02 and 0.04 inches (0.508 mm and 1.016 mm).

8. The portable boroscope assembly of any of claims 4 to 7, wherein a ratio of a length of the probe tip (71) to a diameter of the probe tip (71) is between 434 and 1469.

9. The portable boroscope assembly of any of claims 5 to 8, wherein the probe tip (71) is configured to be inserted into an internal passage (58) established within a blade (50).

10. The portable boroscope assembly of any preceding claim, wherein the protective case (86) is configured to hold at least a portion of the probe (68).

11. The portable boroscope assembly of any preceding claim, wherein the battery (76) is a rechargeable battery.

12. A turbomachine blade boroscope inspection method, comprising:
powering a boroscope inspection device (66) using a battery (76); and
inspecting a fluid passage (58) established within a turbomachine blade (50) using the boroscope inspection device (66).

13. The turbomachine blade boroscope inspection method of claim 12, further including holding the battery (76) and a display screen (78) of the boroscope inspection device within a protective case (82).

14. The turbomachine blade boroscope inspection method of claim 13, including displaying an image of the turbomachine through an aperture (86) established in the case (82).

15. The turbomachine blade boroscope inspection method of claim 12, 13 or 14, including recharging the battery (76).
